# NEUE EUROPÄISCHE PATENTSCHRIFT

(11) **EP 2 847 290 B2**
(45) Veröffentlichungstag und Bekanntmachung des Hinweises auf die Entscheidung über den Einspruch: **24.10.2018**
(45) Hinweis auf die Patenterteilung: 02.09.2015
(21) Anmeldenummer: 13720942.5
(22) Anmeldetag: 06.05.2013
(51) Int. Cl.: C09J 131/04, C09J 133/08, C09J 133/10, C09J 133/02

(54) **VERWENDUNG VON COPOLYMERISATEN ALS KLEBRIGMACHER FÜR KLEBSTOFFE**
USE OF COPOLYMERS AS TACKIFIERS FOR ADHESIVES
UTILISATION DE COPOLYMÈRES COMME TACKIFIANTS POUR DES ADHÉSIFS

(30) Priorität: 10.05.2012 DE 102012207801
(43) Veröffentlichungstag der Anmeldung: 18.03.2015
(73) Patentinhaber: Wacker Chemie AG, 81737 München (DE)
(72) Erfinder: HASHEMZADEH, Abdulmajid, 84489 Burghausen (DE); KAISER, Stephan, 84359 Simbach (DE); KÖGLER, Gerhard, 84508 Burgkirchen (DE)
(74) Vertreter: Ege, Markus
(86) Internationale Anmeldenummer: PCT/EP2013/059399
(87) Internationale Veröffentlichungsnummer: WO 2013/167537

(56) Entgegenhaltungen:
- WO-A1-2007/057338
- WO-A1-2007/057338
- WO-A1-2013/117428
- DE-C1- 4 324 357
- US-A- 4 912 169
- US-A1- 2002 055 587

## Beschreibung

Die Erfindung betrifft die Verwendung von Copolymerisaten als Klebrigmacher für Klebstoffe.

Bisher enthalten viele gängige Klebstoffe Kolophoniumharze oder dessen Derivate, wie Kolophoniumester, als klebrig machende bzw. adhesiv wirkende Komponente. Kolophoniumharze sind als Baumharze Naturprodukte und haben ein gelbes bis braunschwarzes Erscheinungsbild. Bei Raumtemperatur sind Kolophoniumharze jedoch fest und haben eine hohe Erweichungstemperatur. Die gewünschte Klebrigkeit wird deswegen erst durch Zugabe von organischen Lösungsmitteln oder Weichmachern erzielt. In der DE 19531849 werden hierzu Lösungen von Kolophoniumharzen in Fettsäureestern beschrieben und als Klebrigmacher für Dispersionsklebstoffe auf Basis von Styrol/Acrylsäureester-Copolymeren eingesetzt. Die WO 97/40117 betrifft harzhaltige Dispersionsklebstoffe auf Basis von wässrigen Polymerdispersionen, die Harzzubereitungen auf Basis von 20 bis 90 Gew.-% an Kolophonium-Harzen sowie 80 bis 10 Gew.-% an bei Raumtemperatur flüssigen Ölen enthalten. Bei den flüssigen Ölen handelt es sich entweder um bestimmte Glycerinester oder um bestimmte Gemische von gesättigten oder ungesättigten C14- bis C22-Fettsäuren pflanzlicher Herkunft und einwertigen C1- bis C12-Alkoholen.

Kolophoniumharze bringen jedoch wegen ihrer nicht hinreichenden Wärmestabilität und Wetterbeständigkeit sowie wegen ihres Geruches Probleme mit sich. Daher werden die Kolophoniumharze üblicherweise modifiziert. In der JP-B-33771/1970 und JP-B-20599/1974 ist ein Verfahren zur Disproportionierung von Kolophonium oder Kolophoniumverbindungen mit speziellen organischen Schwefelverbindungen beschrieben. Entsprechende disproportionierte Kolophoniumverbindungen sind jedoch hinsichtlich Farbe, Geruch und Stabilität noch nicht befriedigend. In der EP 0520541 wird die Behandlung mit einer Phosphorsäure oder einer Kombination aus einer starken Säure und einer phosphathaltigen Substanz beschrieben. Das Verfahren ergibt stabilisiertes Kolophonium von heller Farbe, das als Klebrigmacher und als Leimungsmittel eingesetzt werden kann. Zu Leimungszwecken wird das Kolophonium üblicherweise in Form einer wässrigen Dispersion verwendet. Der hohe Erweichungspunkt von Kolophoniumharzen ist dann bei der Herstellung von Dispersionen von Nachteil, da hier sehr hohe Temperaturen und hohe Scherkräfte notwendig sind. Nachteiligerweise ist Kolophonium reizend und durch Hautkontakt ist eine Sensibilisierung möglich. Weiterhin erhöht die Verwendung von Weichmachern auch die Emissionskonzentration bei Verwendung von kolophoniumhaltigen Klebstoffen.

Vor diesem Hintergrund lag der vorliegenden Erfindung die Aufgabe zu Grunde, neue klebrig machende Polymere als Ersatz für Kolophonium bereitzustellen, die nicht die nachteiligen Eigenschaften von Kolophonium hinsichtlich Farbe, Geruch, Stabilität oder Verarbeitbarkeit aufweisen. Darüber hinaus sollten die damit erhältlichen Klebstoffe ohne zusätzliche Modifizierung mit weichmachenden Additiven über die gewünschte Flexibilität und Verarbeitbarkeit verfügen.

Überraschenderweise wurde diese Aufgabe mit Copolymensaten gelost, die auf bestimmten Gewichtsmengen an bestimmten Monomeren basieren und durch radikalisch initiierte Lösungspolymerisation hergestellt sind.
Ahnliche Copolymerisate sind an sich bereits bekannt und werden beispielsweise in der WO 2007/057338 als alkalilösliche Klebemittel für 100 Prozentsysteme eingesetzt; d.h. die Klebemittel der WO 2007/057338 enthalten ausschließlich die vorgenannten Copolymere.

Gegenstand der Erfindung ist die Verwendung von Copolymerisaten als Klebrigmacher für Klebstoffe, dadurch gekennzeichnet, dass die Klebstoffe ein oder mehrere Basispolymere, ein oder mehrere Klebrigmacher, gegebenenfalls ein oder mehrere Füllstoffe und gegebenenfalls ein oder mehrere Additive enthalten, wobei die als Klebrigmacher eingesetzten Copolymerisate erhaltlich sind durch radikalisch initiierte Losungspolymerisation von
a) einem oder mehreren ethylenisch ungesättigten Monomeren ausgewählt der Gruppe umfassend Vinylacetat, Methylmethacrylat, Methylacrylat und Styrol,
b) 5 bis 60 Gew.-% von einem oder mehreren ethylenisch ungesättigten Monomeren ausgewählt aus der Gruppe
umfassend Vinylester von unverzweigten oder verzweigten Alkylcarbonsäuren mit 3 bis 15 C-Atomen und Acryl- säureester oder Methacrylsäureester von unverzweigten oder verzweigten Alkoholen mit 2 bis 22 C-Atomen, und c) 0,5 bis 15 Gew.-% von einem oder mehreren ethylenisch ungesättigten Monomeren enthaltend mindestens eine weitere funktionelle Gruppe ausgewählt aus der Gruppe umfassend Sulfonsäure-, Schwefelsaure-, Phosphonsäure-, Carbonsaure-Gruppen, oder die Salze der genannten Säuren, Carbonsäureanhydrid-, Hydroxy-Gruppen, Silicium- funktionelle Gruppen und Amin- oder Ammonium-Gruppen,
wobei sich die Angaben in Gew.-% jeweils auf das Gesamtgewicht des jeweiligen Copolymerisats beziehen, und wobei die Basispolymere von den Klebrigmachern verschieden sind.

Die erfindungsgemäß als Klebrigmacher eingesetzten Copolymerisate auf Basis der Monomere a) bis c) werden im Folgenden auch kurz als Klebrigmacher bezeichnet.

Die erfindungsgemäßen Klebrigmacher verstärken insbesondere die adhesiven Eigenschaften der Klebstoffe und steigern die Haftwirkung zwischen einem bei der Applikation des Klebstoffs gebildeten Klebefilm und dem Substrat. Insbesondere steigern Klebrigmacher auch die Anfangsklebrigkeit der Klebstoffe, beispielsweise vor einem etwaigen Abbinden oder Vernetzen weiterer Klebstoffkomponenten bzw. vor Entweichen von etwaigen Lösungsmitteln. Die Basispolymere der Klebstoffe wirken hingegen vorwiegend kohäsiv, d.h. die Basispolymere steigern insbesondere den Zusammenhalt innerhalb eines aus dem Klebstoff gebildeten Klebefilms.

Das bevorzugte Monomer a) ist Vinylacetat. Die Klebrigmacher enthalten vorzugsweise 38 bis 89 Gew.-%, besonders bevorzugt 50 bis 78 Gew.-% und am meisten bevorzugt 59 bis 72 Gew.-% Monomere a), bezogen auf das Gesamtgewicht des Copolymerisats.

Als Monomere b) geeignete Vinylester sind beispielsweise Vinyl-2-ethylhexanoat, Vinylpivalat, 1-Methylvinylacetat, Vinylpropionat, Vinylbutyrat und vorzugsweise Vinyllaurat, Vinylester von α-verzweigten Monocarbonsäuren mit 5 bis 13 C-Atomen, insbesondere 5 bis 11 C-Atomen, beispielsweise VeoVa5, VeoVa6, VeoVa7, VeoVa8, VeoVa9 oder VeoVa10 (Handelsnamen der Firma Shell). Besonders bevorzugt sind Vinyllaurat, VeoVa5, VeoVa6, VeoVa7, VeoVa8, VeoVa9, VeoVa10 oder VeoVa11 VeoVa steht für Ester der Versatic-Säure.

Als Monomere b) geeignete Acrylsäureester oder Methacrylsäureester sind beispielsweise Ethylacrylat, Ethylmethacrylat, Propylacrylat, Propylmethacrylat n-Butylacrylat, n-Butylmethacrylat, 2-Ethylhexylacrylat, Norbornylacrylat. Bevorzugt sind auch n-Butylacrylat oder 2-Ethylhexylacrylat.

Am meisten bevorzugte Monomere b) sind Vinyllaurat, VeoVa10, VeoVa11, 2-Ethylhexylacrylat, n-Butylacrylat oder n-Butylmethacrylat.

Der Anteil der Monomere b) beträgt vorzugsweise 10 bis 50 Gew.-%, besonders bevorzugt 15 bis 45 Gew.-% und am meisten bevorzugt 20 bis 40 Gew.-%, jeweils bezogen auf das Gesamtgewicht des Copolymerisats.

Bevorzugte funktionelle Gruppen der Monomere c) sind Ammonium-Gruppen und insbesondere Carbonsäure-Gruppen oder Hydroxy-Gruppen. Bevorzugte Copolymerisate enthalten mindestens zwei unterschiedliche Einheiten von Monomeren c). Besonders bevorzugt enthalten Copolymerisate eine Monomer-Einheit enthaltend eine Carbonsäure-Gruppe und eine Monomer-Einheit enthaltend eine Hydroxy-Gruppe.

Als Monomere c) geeignete ethylenisch ungesättigte Carbonsäuren sind beispielsweise Acrylsäure, Methacrylsäure, Crotonsäure, Itaconsäure, Fumarsäure, Maleinsäure, Monoester der Fumarsäure oder der Maleinsäure, wie die Diethyl- und Diisopropylester oder Fettsäuren mit 7 bis 25 Kohlenstoffatomen, sowie die Salze der genannten Carbonsäuren. Beispiele für Fettsäuren sind Undecenylsäure, Myristolsäure, Palmitolsäure und insbesondere die Ölsäure.

Bevorzugt sind die Crotonsäure, Acryl- und Methacrylsäure, sowie die Salze der genannten Carbonsäuren.

Geeignete Monomere c) sind auch mit Hydroxy-Gruppen substituierte Methacrylsäure- oder Acrylsäureester, wie Hydroxyethyl-, Hydroxypropyl- oder Hydroxybutylacrylat oder -methacrylat;

Bevorzugt werden auch Hydroxyethylacrylat oder Hydroxyethylmethacrylat, Hydroxypropylacrylat oder Hydroxypropylmethacrylat.

Weitere geeignete Monomere c) sind ethylenisch ungesättigte Anhydride, wie Maleinsäureanhydrid; ethylenisch ungesättigte aminofunktionelle Monomere, vorzugsweise 2-Dimethylaminoethylmethacrylat, 3-Dimethylaminopropylmethacrylamid, 3-Trimetylammoniumpropylmethacrylamidchlorid, 2-tert. Butylaminoethylmethacrylat, Allyl-N-(2-amonoethyl)-carbamat-hydrochlorid, Allyl-N-(6-aminohexyl)-carbamat-hydrochlorid, Allyl-N-(3-amino-propyl)-hydrochlorid, Allylamin, Vinylpyridin; ethylenisch ungesättigte Monomere mit quarternären Ammoniumgruppen, wie Diallyldimethylammoniumchlorid (DADMAC), Diallyldi-ethylammoniumchlorid (DADEAC), (3-Methacryloxy)propyltrimethylammoniumchlorid (MPTAC),(3-Methacryloxy)ethyltrimethylammoniumchlorid (METAC), (3-Methacrylamido)propyltrimethyl-ammoniumchlorid (MAPTAC), 2-Dimethylaminoethylmethacrylat oder 3-Dimethylaminopropylmethacrylamid (DMAEMA oder DMAPMA bei pH ≤ 5 protonierte Spezies); 1-(3-Sulfopropyl)-2-vinylpyridiniumbetain, N-(2-Methacryloyloxyethyl)-N,N-dimethyl-N-(3-sulfopropyl) ammoniumbetain.

Geeignet sind auch Monomere c) mit Sulfonsäure- oder SulfonatGruppen, wie Vinylsulfonsäure, Styrolsulfonsäure, Allylsulfonsäure, Methallylsulfonsäure, p-Methallyloxyphenylsulfonsäure, und Sulfonsäuren der allgemeinen Formel CH₂=CR¹-CO-X-CR²R³-R⁴-SO₃H, wobei X = O oder NH, und R¹, R², R³ gleich oder verschieden sind und die Bedeutung H und C₁- bis C₃-Alkyl haben, und R⁴ C₁- bis C₄-Alkylen ist, sowie die Salze der genannten Säuren. Bevorzugt werden auch Vinylsulfonsäure, Sulfopropyl(meth)acrylat, 2-Acrylamido-2-methylpropansulfonsäure und Methallylsulfonsäure, 1-Allyloxy-2-Hydroxy-Sulfonsäure, Acrylsäure-(3-sulfopropyl)-Ester, Methacrylsäure-(3-sulfopropyl)-ester, Itaconsäure-bis-(3-sulfopropyl)-ester, sowie die Salze der genannten Säuren.

Weitere Beispiele für Monomere c) sind Silicium-funktionelle Monomere, wie Acryloxypropyltri(alkoxy)- und Methacryloxypropyltri(alkoxy)-Silane, Vinyltrialkoxysilane oder Vinylmethyldialkoxysilane, wobei als Alkoxygruppen beispielsweise Methoxy-, Ethoxy- und Ethoxypropylenglykolether-Reste enthalten sein können.

Der Anteil der Monomere c) beträgt vorzugsweise 1 bis 12 Gew.-%, besonders bevorzugt 2 bis 10 Gew.-% und am meisten bevorzugt 3 bis 6 Gew.-%, jeweils bezogen auf das Gesamtgewicht des Copolymerisats.

Neben den Monomeren a) bis c) können gegebenenfalls noch ein oder mehrere weitere Hilfsmonomere copolymerisiert werden. Beispiele für Hilfsmonomere sind Olefine oder Diene, wie Ethylen, Propylen oder 1,3-Butadien, Vinylaromaten, wie Vinyltoluol, oder Vinylhalogenid, wie Vinylchlorid. Weitere Beispiele für Hilfsmonomere sind ethylenisch ungesättigte Carbonsäureamide und -nitrile, vorzugsweise Acrylamid und Acrylnitril; wietere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Genannt seien auch Monomere mit CO-Gruppen sowie Verbindungen wie Diacetonacrylamid und Acetylacetoxyethylacrylat oder -methacrylat. Weitere geeignete Comonomere sind Vinylalkylether, wie beispielsweise Vinylmethylether, Vinylethylether, Vinylisobutylether, Vinyloctadecylether. Hilfsmonomere werden vorzugsweise zu 0,05 bis 50 Gew.-%, besonders bevorzugt zu 1 bis 10 Gew.-%, bezogen auf das Gesamtgewicht des Copolymerisats copolymerisiert. Am meisten bevorzugt werden keine Hilfsmonomere copolymerisiert.

Bevorzugte Klebrigmacher sind Copolymerisate auf Basis von
a) 50 bis 78 Gew.-% Vinylacetat,
b) 20 bis 40 Gew.-% von einem oder mehreren Monomeren aus der Gruppe umfassend Vinyllaurat, n-Butylacrylat, VeoVa6, VeoVa7, VeoVa8, VeoVa9, VeoVa10 und VeoVa11 sowie
c) 2 bis 10 Gew.-% von einem oder mehreren Monomeren aus der Gruppe umfassend Acrylsäure oder deren Salze, Hydroxyethyl-, Hydroxypropyl-acrylat oder -methacrylat, Vinyltrialkoxysilane oder Vinylmethyldialkoxysilane,
wobei sich die Angaben in Gew.-% jeweils auf das Gesamtgewicht des jeweiligen Copolymerisats beziehen und sich auf 100 Gew.-% aufaddieren.

Die Monomerauswahl bzw. die Auswahl der Gewichtsanteile der Comonomere der Copolymerisate erfolgt dabei so, dass im Allgemeinen eine Glasübergangstemperatur Tg von -40°C bis +20°C, vorzugsweise -30°C bis +15°C resultiert. Die Glasübergangstemperatur Tg der Copolymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Der Quotient der komplexen Schmelzviskosität SVI (40/60) der erfindungsgemäßen Klebrigmacher beträgt vorzugsweise ≥ 10, besonders bevorzugt 10 bis 50 und am meisten bevorzugt 15 bis 30. Der vorgenannte Quotient ist durch folgende Formel definiert: SVI (40/60) = η* (40°C) / η* (60°C), wobei η* (40°C) für die komplexe Schmelzviskosität bei 40°C und η* (60°C) für die komplexe Schmelzviskosität bei 60°C steht. Die Bestimmung der komplexen Schmelzviskosität erfolgt mit dem Gerät Bohlin CVO 120 HR mit dem Messsystem Platte/Platte und wurde durch oszillierende Messung bei einer Frequenz von 1 Hz bei der genannten Temperatur gemessen.

Die Copolymerisate besitzen mittlere Molekulargewichte Mw von vorzugsweise 20.000 g/mol bis 400.000 g/mol, besonders bevorzugt von 30.000 g/mol bis 100.000 g/mol.

Die Herstellung der als Klebrigmacher eingesetzten Copolymerisate erfolgt nach dem Lösungspolymerisations-Verfahren.

Die Herstellung der Klebrigmacher mittels Lösungspolymerisation erfolgt im Allgemeinen in Abwesenheit von Emulgatoren oder Schutzkolloiden. So hergestellte Klebrigmacher zeigen gegenüber entsprechenden Emulgator- oder Schutzkolloid-stabilisierten Systemen eine stärkere Anfangsklebrigkeit bei Einsatz als Klebrigmacher. Emulgatoren und Schutzkolloide sind dem Fachmann bekannt.

Geeignete Lösungsmittel für die Lösungspolymerisation sind beispielsweise organische Lösungsmittel umfassend Alkohole, Ketone oder Ester. Bevorzugte Lösungsmittel sind einwertige, aliphatische Alkohole mit 1 bis 6 C-Atomen, wie Methanol, Ethanol, Propanol oder Isopropanol; aliphatische Ketone mit 3 bis 6 C-Atomen, wie Aceton, Methylethylketon, Methylisobutylketon; einwertige Ester von aliphatischen Monocarbonsäuren und aliphatischen Alkoholen mit jeweils 1 bis 4 C-Atomen, wie Methylacetat, Ethylacetat, Propylacetat, Butylacetat. Besonders bevorzugt sind Methanol, Ethanol, Isopropanol, Aceton, Methylethylketon, Methylacetat oder Ethylacetat. Am meisten bevorzugt ist Isopropanol, Methanol oder Ethylacetat.

Geeignet sind auch Gemische von einem oder mehreren organischen Lösungsmitteln und Wasser. Es können beispielsweise ≤ 25 Gew.-%, vorzugsweise ≤ 10 Gew.-% Wasser eingesetzt werden, bezogen auf das Gesamtgewicht der organischen Lösungsmittel. Besonders bevorzugt wird kein Wasser als Lösungsmittel zugesetzt.

Vorzugsweise sind während der Lösungspolymerisation ≥ 10 Gew.-%, besonders bevorzugt ≥ 15 Gew.-% und am meisten bevorzugt ≥ 20 Gew.-% regelnd wirkende Lösungsmittel zugegen. Vorzugsweise sind während der Lösungspolymerisation ≤ 60 Gew.-%, mehr bevorzugt ≤ 55 Gew.-%, noch mehr bevorzugt ≤ 50 Gew.-%, besonders bevorzugt ≤ 45 Gew.-%, ganz besonders bevorzugt ≤ 44 Gew.-% und am meisten bevorzugt ≤ 43 Gew.-% regelnd wirkende Lösungsmittel zugegen. Die Angaben in Gew.-% beziehen sich auf das Gesamtgewicht der insgesamt eingesetzten ethylenisch ungesättigten Monomere und Lösungsmittel. Regelnd wirkende Lösungsmittel sind beispielsweise die vorgenannten organischen Lösungsmittel, insbesondere Methanol, Methylethylketon und vorzugsweise Isopropanol. Mit regelnd wirkenden Lösungsmitteln kann beispielsweise die komplexe Schmelzviskosität SVI der Klebrigmacher vorteilhaft beeinflusst werden. Bei Einsatz von zusätzlichen Reglern, wie Aldehyde oder Mercaptane, können die genannten Grenzen gegebenenfalls auch unterschritten werden.

Überraschenderweise kann mit den erfindungsgemäßen Lösungsmitteln und ihren Einsatzmengen das Adhesionsvermögen der erfindungsgemäßen Klebrigmacher gesteigert werden.

Die Reaktion wird im Allgemeinen unter Rückflussbedingungen, im Allgemeinen bei einer Polymerisationstemperatur von 40°C bis 140°C, durchgeführt. Dies kann sowohl bei Normaldruck als auch unter leichtem Überdruck erfolgen. Als Inititatoren werden organische Peroxide oder Azoverbindungen verwendet. Geeignet sind beispielsweise Diacylperoxide wie Dilauroylperoxid, Peroxoester wie t-Butylperoxopivalat oder t-Butylperoxo-2-ethylhexanoat, oder Peroxodicarbonate wie Diethylperoxodicarbonat. Die Initiatormenge beträgt im Allgemeinen von 0,01 bis 5,0 Gew.-%, bezogen auf die Monomeren. Die Initiatoren können sowohl vorgelegt als auch dosiert werden. Dabei hat es sich bewährt, einen Teil der benötigten Initiatormenge vorzulegen und den Rest kontinuierlich während der Reaktion zu dosieren.

Zur Herstellung der als Klebrigmacher eingesetzten Copolymerisate kann nach einem Batchverfahren gearbeitet werden, wobei alle Komponenten des Polymerisationsansatzes im Reaktor vorgelegt werden, oder nach einem Semi-Batchverfahren, wobei einzelne oder mehrere Komponenten vorgelegt werden und der Rest zudosiert wird, oder eine kontinuierliche Polymerisation durchgeführt werden, wobei die Komponenten während der Polymerisation zudosiert werden. Die Dosierungen können gegebenenfalls separat (räumlich und zeitlich) durchgeführt werden.

Nach dem Ende der exothermen Reaktion werden vorzugsweise die restlichen freien Monomere und das Lösungsmittel entfernt. Um einen sehr niedrigen VOC-Gehalt zu erhalten, wird die Innentemperatur bis auf 100°C bis 160°C erhöht und anschließend ein Vakuum angelegt. Die Copolymerisate können mittels Abdestillieren von Lösungsmitteln isoliert werden. Alternativ können die Lösungsmittel auch durch Strippen entfernt werden, wobei die Copolymerisate in Form von wässrigen Dispersionen oder Lösungen erhalten werden. Beim Strippen werden Schleppmittel, wie Wasser, insbesondere Heißdampf, zugesetzt, die anschließend vorzugsweise bei 100°C bis 200°C, vorzugsweise im Vakuum, ganz oder teilweise abdestilliert werden. Alternativ können die Lösungsmittel auch mittels Wirbelschichttrocknung, Gefriertrocknung oder vorzugweise Sprühtrocknung entfernt werden. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C.

Durch Entfernen der Lösungsmittel fallen die Copolymerisate im Allgemeinen in Form von Feststoffen an. Zur Erhöhung der Lagerfähigkeit der Feststoffe können Antiblockmittel (Antibackmittel) beigemengt werden, wie beispielsweise Ca- bzw. Mg-Carbonat, Talk, Gips, Kieselsäure, Kaoline oder Silicate. Dadurch kann die Verblockungsstabilität der Feststoffe verbessert werden.

Die erfindungsgemäßen Klebrigmacher können in beliebiger Form als Klebrigmacher in die Klebstoffe eingebracht werden, beispielsweise in Form von Feststoffen, vorzugsweise in Form einer Schmelze oder in Form von Lösungen oder Dispersionen, insbesondere in Wasser. Das Lösen der erfindungsgemäßen Klebrigmacher erfolgt vorzugsweise bei pH-Werten von 7 bis 10, insbesondere von 8 bis 9, und/oder vorzugsweise bei Temperaturen von 70°C bis 90°C.

Rezepturen der Klebstoffe enthalten beispielsweise
5 bis 40 Gew.-%, vorzugsweise 10 bis 40 Gew.-% an einem oder mehreren erfindungsgemäßen Klebrigmachern,
15 bis 40 Gew.-%, vorzugsweise 20 bis 40 Gew.-% an einem oder mehreren Basispolymere,
gegebenenfalls 30 bis 60 Gew.-% an einem oder mehreren Füllstoffe und
gegebenenfalls 0,5 bis 5 Gew.-% an einem oder mehreren Additiven. Die Angaben in Gew.-% beziehen sich auf das Gesamtgewicht des jeweiligen Klebstoffs und addieren sich auf 100 Gew.-% auf.

Die Klebstoffe können noch übliche Mengen an Wasser oder Lösungsmittel enthalten. Dadurch kann auch die je nach Anwendungsgebiet gewünschte Viskosität der Klebstoffe eingestellt werden.

Klarstellend sei angemerkt, dass sich die Basispolymere des jeweiligen Klebstoffs von den als Klebrigmacher eingesetzten Copolymerisaten unterscheiden. Die Basispolymere sind also von den erfindungsgemäßen Klebrigmachern verschieden.

Als Basispolymere können beispielsweise physikalisch abbindende Klebstoffe oder chemisch härtende Klebstoffe eingesetzt werden. Physikalisch abbindende Klebstoffe entfalten ihre klebende Wirkung, ohne dass klebend wirkende Komponenten eine chemische Transformation erfahren. Beispiele hierfür sind lösemittelhaltige Nassklebstoffe, Dispersionsklebstoffe, druckempfindliche Klebstoffe oder Hotmelts enthaltend im Allgemeinen Polymere, wie Homo- oder Copolymere von Polymilchsäure oder Homo- oder Copolymere von ethylenisch ungesättigten Monomeren. Bei chemisch härtenden Klebstoffen kommt die klebende Wirkung dagegen durch chemische Reaktion von verschiedenen Bestandteilen der Klebstoffe zustande. Es sind einkomponentige und zweikomponentige Systeme bekannt. Beispiele für chemisch härtende Klebstoffe sind Cyanacrylat-Klebstoffe, Methylmethacrylat-Klebstoffe, Phenol-Formaldehydharz-Klebstoffe, Silikone, Silan-vernetzende Polymerklebstoffe, Epoxidharz-Klebstoffe, Polyurethanklebstoffe oder sonstige vernetzbare Polymere. Die Klebstoffe können nach thermisch oder unter Einwirkung von Metallen oder Strahlung induziert werden. All die vorgenannten Begriffe sind dem Fachmann wohlbekannt.

Als Dispersionsklebstoffe bevorzugte Basispolymere basieren auf einem oder mehreren ethylenisch ungesättigten Monomeren ausgewählt aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene oder Vinylhalogenide. Beispiele und bevorzugte Ausführungsformen dieser Monomere sind weiter oben schon aufgeführt.

Bevorzugte Basispolymere von ethylenisch ungesättigten Monomeren sind Vinylacetat-Homopolymerisate; Copolymerisate von Vinylacetat mit einem oder mehreren weiteren Vinylestern, insbesondere Vinyllaurat, VeoVa9, VeoVa 10 oder VeoVa11 und gegebenenfalls Ethylen; Copolymerisate von Vinylacetat mit Ethylen und/oder Vinylchlorid; Copolymerisate von Vinylacetat mit (Meth)acrylsäureestern, wie Butylacrylat, sowie gegebenenfalls Vinyllaurat.

Styrol-Homopolymerisate; Copolymerisate von Styrol und Butadien oder (Meth)acrylsäureestern, wie Butylacrylat oder Ethylhexylacrylat; Meth)acrylsäureester-Homopolymerisate; Copolymerisate von (Meth)acrylsäureestern, wie Methylmethacrylat, Butylacrylat oder Ethylhexylacrylat; Homo- oder Copolymere von Isopren.

Die Herstellung der Basispolymere von ethylenisch ungesättigten Monomeren erfolgt im Allgemeinen nach Lösungspolymerisationsverfahren oder vorzugsweise in wässrigem Medium nach dem Suspensions-, oder vorzugsweise Emulsionspolymerisations-Verfahren wie beispielsweise in DE-A 102006007282 beschrieben. Die Polymerisate fallen dabei in Form von wässrigen Dispersionen an. Bei der Polymerisation können die gängigen Schutzkolloide und/oder Emulgatoren eingesetzt werden, wie in der DE-A 102006007282 beschrieben. Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Die Basispolymere können beispielsweise in Form von wässrigen Dispersionen oder nach Trocknen als Feststoff, insbesondere in Form von in Wasser redispergierbaren Pulvern, oder als wässrige Redispersionen der Feststoffe oder als Feststoff zur Herstellung der Klebstoffe eingesetzt werden. Vorzugsweise werden die bei der Herstellung der Basispolymerisate anfallenden wässrigen Dispersionen direkt für die Herstellung der Klebstoffe eingesetzt.

Die Klebstoffe enthalten vorzugsweise ein oder mehrere erfindungsgemäße Klebrigmacher und ein oder mehrere Basispolymere, deren Mischungen einen Quotienten der komplexen Schmelzviskosität SVI (40/60) von vorzugsweise ≥ 10 und besonders bevorzugt 10 bis 50 haben.

Beispiele für Füllstoffe sind wie Ton, Lehm, Kaolin, Kieselerde, Kreide, Quarz, Kieselsäure, Ruß oder sonstige Metall- oder Halbmetalloxide, beispielsweise in Form von Glasfasern, Glaskugeln, Quarzmehl oder Gesteinsmehl. Die Füllstoffe haben vorzugsweise Teilchengrößen von 0,4 nm bis 500 µm.

Beispiele für Additive sind Entschäumer, Konservierungsmittel, Verlaufsmittel, Faser, Pigmente, Emulgatoren, Verdicker, Lösemittel oder sonstige Nanoteilchen oder gegebenenfalls auch Weichmacher. Zur pH-Einstellung können bekannte Stoffe wie z.B. Puffer, Laugen, wie Ammoniak, Amine, insbesondere 2-Amino-2-methyl-1-propanol oder Triethanolamin, eingesetzt werden. Bevorzugte Klebstoffe enthalten aber keine Lösemittel oder Weichmacher.

Die Herstellung der Klebstoffe erfolgt, indem die vorgenannten Komponenten gemischt werden. Das Mischen kann in herkömmlichen Mischern erfolgen, wie beispielsweise mit Rührwerken, Dissolvern, Knetapparaturen, Extruder oder in einer Mühle.

Überraschenderweise wirken die erfindungsgemäßen Copolymerisate auf Basis der Monomere a) bis c) als Klebrigmacher für Klebstoffe und verbessern unerwarteter Weise die Anfangsfestigkeit der Klebstoffe und deren Adhesionseigenschaften. Die Zusammensetzung der erfindungsgemäß eingesetzten Copolymerisate ist für ihre hohe und vorteilhafte klebrig machende Wirkung verantwortlich. Zudem verfügen die erfindungsgemäßen Klebrigmacher noch über kohäsive Eigenschaften. Die erfindungsgemäßen Copolymerisate sind somit als Ersatz für Kolophoniumharze bestens geeignet. Die durch Kolophoniumharze bewirkten Mängel, wie beispielsweise mangelnde Stabilität, unerwünschter Geruch oder Farbe können eliminiert werden. Des Weiteren ist es technische Routine, die erfindungsgemäßen Copolymerisate global und jederzeit in gleichbleibender Qualität bereitzustellen, was im Falle des Naturprodukts Kolophonium in der Praxis nicht zuverlässig der Fall ist.

Die erfindungsgemäßen Klebrigmacher verfügen über besonders vorteilhafte Verarbeitungseigenschaften. Insbesondere im Bereich der Raumtemperatur und damit bei der üblichen Anwendungstemperatur von Klebstoffen sind die erfindungsgemäßen Klebrigmacher im Allgemeinen hochviskos und zudem hochgradig klebrig. Durch Erhöhen der Temperatur, beispielsweise auf 60°C bis 70°C, lässt die Klebrigkeit der erfindungsgemäßen Klebrigmacher sprunghaft nach und verringert sich beispielsweise auf einen zehnfach geringeren Wert, was die Handhabung und Verarbeitbarkeit der Klebrigmacher erheblich vereinfacht, da die Klebrigkeit der erfindungsgemäßen Klebrigmacher über die Temperatur weitgehend aus- bzw. angeschaltet werden kann.

Vorteilhafterweise kann auf Grund der erfindungsgemäßen Monomerzusammensetzung der Klebrigmacher auf Weichmacher oder Zusätze an Lösungsmitteln in den Klebstoffen verzichtet werden, ohne anwendungstechnische Nachteile in Kauf nehmen zu müssen. Bei der erfindungsgemäßen Vorgehensweise ist es also nicht erforderlich, den Klebstoffen zusätzliche Weichmacher, wie Phthalate oder Derivate des Phenols oder Zitronensäure, zuzusetzen. Vorteilhafterweise entfalten auch (Meth)acrylsäureester-freie Klebrigmacher ihre Wirkung als Klebrigmacher, so dass die Freisetzung toxischer Substanzen, wie Methanol, Butanol oder Hexanol, unterbunden werden kann.

Auf die Verarbeitbarkeit der erfindungsgemäßen Klebrigmacher hat sich überraschenderweise auch die Konzentration der Lösungsmittel bei der Polymerisation und damit zusammenhängend der erfindungsgemäße Festgehalt der im Zuge der Polymerisation erhaltenen Lösungen oder Dispersionen der Copolymerisate auf Basis der Monomere a) bis c) vorteilhaft ausgewirkt.

Der Einsatz der erfindungsgemäßen Klebrigmacher in Kombination mit den Basispolymeren ermöglicht eine gezielte Einstellung der Klebstoffeigenschaften, insbesondere eine ausgewogene Adhäsions-Kohäsionsbalance der Klebstoffe. Dies gilt insbesondere auch im Falle von Füllstoffe enthaltenden Klebstoffen, die besonders hohe Anforderungen an die Klebrigmacher stellen.

Die Klebstoffe können in den verschiedensten Anwendungsfeldern Einsatz finden, wie beispielsweise bei der Verklebung von Fußböden, in Straßenanstrichen, als Leimungsmittel in der Papierherstellung, als Schmelzkleber, druckempfindlicher Kleber, Kontaktkleber oder Reaktivkleber. Reaktivkleber können Einkomponentenkleber oder Zweikomponentenkleber sein, beispielsweise feuchtigkeitsvernetzende Kleber, wie Kleber basierend auf Silanen und Isocyanaten, oder unter Einwirkung von Strahlung, wie Elektronen- oder UV-Strahlung, vernetzende Kleber. Die Klebstoffe können auch in Kombination Kompositen eingesetzt werden. Komposite sind Polymere, die anorganische sowie organische Polymerdomänen enthalten, bei denen es sich vorzugsweise Nanopartikel handelt.

Die Klebrigmacher bzw. die Klebstoffe können auch in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen, Fußbodenspachtelmassen, Verlaufsmassen, Dichtschlämmen, Fugenmörtel und Farben und zur Betonmodifizierung eingesetzt werden.

Die nachfolgenden Beispiele dienen zur weiteren Erläuterung der Erfindung:

### Herstellung der klebrigmachenden Copolymerisate:

### Beispiel 1:

In einem 2,5 1-Glasrührtopf mit Ankerrührer, Rückflusskühler und Dosiereinrichtungen wurden 552 g i-Propanol, 150 g Monomermischung der Dosierung 2 und 5,3 g PPV (t-Butylperpivalat, 75 %-ige Lösung in Aliphaten) vorgelegt. Anschließend wurde die Vorlage bei einer Rührerdrehzahl von 200 Upm auf 75°C aufgeheizt. Nach Erreichen der Innentemperatur von 75°C wurden Dosierung 1 während 2,5 Stunden und die verbliebenen Mengen an Dosierung 2 während 2 Stunden dosiert.

### Dosierung 1:

13,4 g PPV,
43 g i-Propanol.

### Dosierung 2:

37,7 g Acrylsäure,
490,7 g Vinylacetat,
226,5 g Vinyllaurat.

Nach Ende der Dosierung 1 wurde noch 2 Stunden bei 75°C nachpolymerisiert. Es wurde eine klare Lösung mit einem Feststoffgehalt von 55 Gew.-% erhalten. Zur Isolierung des Copolymers wurde unter Vakuum und erhöhter Temperatur i-Propanol abdestilliert.

### Beispiel 2:

Wie Beispiel 1, aber mit dem Unterschied, dass 15,08 g Acrylsäure und 513,32 g Vinylacetat eingesetzt wurden.

### Beispiel 3:

In einem 2,5 1-Glasrührtopf mit Ankerrührer, Rückflusskühler und Dosiereinrichtungen wurden 371 g i-Propanol, 200 g der Dosierung 2 und 7,0 g PPV (t-Butylperpivalat, 75 %-ige Lösung in Aliphaten) vorgelegt. Anschließend wurde die Vorlage bei einer Rührerdrehzahl von 200 Upm auf 75°C aufgeheizt. Nach Erreichen der Innentemperatur von 75°C wurden Dosierung 1 während 2,5 Stunden und die verbleibenden Mengen an Dosierung 2 während 2 Stunden dosiert.

### Dosierung 1:

17,6 g PPV,
56,9 g i-Propanol.

### Dosierung 2:

49,8 g Acrylsäure,
646,8 g Vinylacetat,
298,5 g Vinyllaurat.

Nach Ende der Dosierung 1 wurde noch 2 Stunden bei 75°C nachpolymerisiert. Es wurde eine klare Lösung mit einem Feststoffgehalt von 70 Gew.-% erhalten. Zur Isolierung des Copolymers wurde unter Vakuum und erhöhter Temperatur i-Propanol abdestilliert.

### Beispiel 4:

Wie Beispiel 1, aber mit dem Unterschied, dass als Dosierung 2 49,8 g Acrylsäure, 547,2 g Vinylacetat und 398 g Vinyllaurat zum Einsatz kamen und nur 20 Gew.-% i-Propanol, bezogen auf das Gesamtgewicht von Dosierung 1 und 2, eingesetzt wurden.

### Vergleichsbeispiel 5(VG 5):

In einem 2,5 1-Glasrührtopf mit Ankerrührer, Rückflusskühler und Dosiereinrichtungen wurden 550 g i-Propanol, 150 g Monomermischung aus Dosierung 2 und 5,3 g PPV (t-Butylperpivalat, 75 %-ige Lösung in Aliphaten) vorgelegt. Anschließend wurde die Vorlage bei einer Rührerdrehzahl von 200 Upm auf 75°C aufgeheizt. Nach Erreichen der Innentemperatur von 75°C wurden Dosierung 1 während 2,5 Stunden und die verbleibenden Mengen an Dosierung 2 während 2 Stunden dosiert.

### Dosierung 1:

13,3 g PPV,
43 g i-Propanol.

### Dosierung 2:

526,8 g Vinylacetat,
225,8 g Vinyllaurat.

Nach Ende der Dosierung 1 wurde noch 2 Stunden bei 75°C nachpolymerisiert. Es wurde eine klare Lösung mit einem Feststoffgehalt von 56% erhalten. Zur Isolierung des Copolymers wurde unter Vakuum und erhöhter Temperatur i-Propanol abdestilliert.

**Tabelle 1: Rezepturen zur Herstellung der klebrig machenden Copolymerisate und deren Schmelzviskositätsindizes (SVI):**

| | Vinylacetat [Gew.-%] | VL^{a)} [Gew.-%] | AS^{b)} [Gew.-%] | i-Propanol ^{c)} [Gew.-%] | SVI^{d)} |
|---|---|---|---|---|---|
| Beispiel 1 | 65 | 30 | 5 | 45 | 17 |
| Beispiel 2 | 68 | 30 | 2 | 45 | 13 |
| Beispiel 3 | 65 | 30 | 5 | 30% | 24 |
| Beispiel 4 | 55 | 40 | 5 | 20% | 16 |
| VG 5 | 70 | 30 | 0 | 45% | 8 |
| a) VL = Vinyllaurat; | | | | | |
| b) AS = Acrylsäure; | | | | | |
| c) bezogen auf das Gesamtgewicht sämtlicher eingesetzten Komponenten; | | | | | |
| d) Schmelzrheologie: Die Schmelzrheologie wurde mit dem Gerät Bohlin CVO 120 HR bestimmt. Es wurde das Messsystem Platte/Platte gewählt. Die komplexe Schmelzviskosität(η*) wurde durch oszillierende Messung bei einer Frequenz von 1 Hz in einem Temperaturbereich von 40 bis 100°C gemessen. Der Quotient aus der komplexen Schmelzviskosität bei 40°C und 60°C ergibt den Schmelzviskositätsindex (SVI): SVI = η* 40°C / η* 60°C. | | | | | |

### Herstellung eines Basispolymers in Form einer Dispersion (Polymerdispersion 1):

In einem 16 1 Rührautoklaven wurden 5200 g Wasser, 97 g des Natriumsalzes eines sulfatierten Nonylphenolpolyglykoethers enthaltend 25 Glykoleinheiten, 48 g eines Alkylsulfonats mit 15 C-Atomen und 21 g Acrylamid vorgelegt und 2230 g Vinylacetat, 840 g Vinyllaurat und 400 g 2-Ethylhexylacrylat einemulgiert. Es wurde auf 50°C aufgeheizt und bis 60 bar mit Ethylen gesättigt.

Der Polymerisationsstart erfolgte durch gleichzeitige Dosierung von jeweils 80 ml/h an 10%iger Ammoniumpersulfatlösung und 5%iger Natriumformaldehydsulfoxylatlösung, und die Polymerisationsweiterführung durch gleichzeitige Dosierung von jeweils 40 ml/h der beiden Lösungen.

Nachdem der Start erfolgt war (erkenntlich an einem Druckanstieg von 2 bar), wurde während 8 h eine Mischung von 2280 g Vinylacetat und 600 g Vinyllaurat sowie eine Lösung von 285 g des obigen Nonylphenolpolyglykoethers, 120 g Acrylsäure und 18 g konzentrierte Ammoniaklösung in 530 g Wasser zudosiert. Nach 2 h war der Ethylendruck auf 60 bar gefallen; zur weiteren Aufrechterhaltung dieses Druckes wurde entsprechend Ethylen nachgedrückt.

Nach Dosierende des Monomergemischs und der Emulgatorlösung wurde der Ethylendruck noch weitere 1,5 h und die Dosierung der Initiatorlösungen noch weitere 6 h aufrechterhalten. Der Ethylendruck fiel dabei auf 25 bar.

Nach Abkühlen und Entspannen resultierte eine Dispersion mit 56% Feststoffgehalt, einer Viskosität von 450 mPa.s (Epprecht Rheometer STV, CIII, bestimmt bei 25°C), einem K-Wert von 84 (nach Fikentscher, Cellulosechemie Band 13, 58, (1932) gemessen in 1%iger Tetrahydrofuranlösung) und einem Ethylengehalt des Copolymers von 25%.

### Herstellung der Klebstoffe:

Sämtliche Komponenten der Klebstoff-Formulierung der Tabelle 2, bis auf das klebrig machende Harz, wurden bei Raumtemperatur homogen gemischt. Anschließend wurde unter Rühren das auf 90°C vorgewärmte Copolymerisat des jeweiligen (Vergleichs)Beispiels zugegeben und homogen gemischt.

**Tabelle 2: Klebstoff-Formulierung (Fußbodenklebstoff) :**

| | Gew.-Teile | Hersteller / Quelle |
|---|---|---|
| Basis-Dispersion | 136 | Polymerdispersion 1: Feststoffgehalt 56% |
| klebrig machendes Harz | 80 | Copolymerisat des jeweiligen (Vergleichs)Beispiels |
| Kreide | 160 | Omyacarb 6-AL, Omya |
| Emulgator | 2,1 | Sulframin B320, AkzoNobel |
| Verdicker | 3, 6 | Latekoll-D 4%-ig in Wasser, BASF |
| Entschäumer | 0,4 | Agitan 305, Münzing Chemie |
| Wasser | 21 | |

**Tabelle 3: klebrig machende Copolymerisate der einzelnen Klebstoff-Formulierungen:**

| | klebrig machendes Harz |
|---|---|
| Vergleichsbeispiel 6 | keines |
| Beispiel 7 | Copolymerisat des Beispiels 1 |
| Beispiel 8 | Copolymerisat des Beispiels 2 |
| Beispiel 9 | Copolymerisat des Beispiels 3 |
| Beispiel 10 | Copolymerisat des Beispiels 4 |
| Vergleichsbeispiel 11 | Copolymerisat des Vergleichsbeispiels 5 |

### Anwendungstechnische Austestungen der Klebstoffe:

Der jeweilige Klebstoff (400 g) wurde mit einer Rakel auf eine Zementfaserplatte (20x50 cm, Eternit® 2000) in Abzugsrichtung aufgetragen. Nach 10, 20 bzw. 30 Minuten Ablüftzeit wurden auf den so vorbereiteten Kleber Nadelfilzbeläge gelegt und mit einer 2,5 kg Walze durch dreimaliges Hin- und Herrollen angepresst, und anschließend wurden die Schälfestigkeiten (SF) mit einem Abzugsgerät nach dem FINAT-Standard bestimmt.

**Tabelle 4: Ergebnisse der Austestung:**

| | Schälfestigkeit SF [N/5cm] | | |
|---|---|---|---|
| Ablüftzeit [min] | 10 | 20 | 30 |
| Vergleichsbeispiel 6 | 2 | 5 | 10 |
| Beispiel 7 | 10 | 14 | 34 |
| Beispiel 8 | 9 | 12 | 33 |
| Beispiel 9 | 10 | 15 | 35 |
| Beispiel 10 | 8 | 14 | 33 |
| Vergleichsbeispiel 11 | 2 | 3 | 7 |

Die Formulierungen basierend auf Harzen mit höheren SVI (> 10) zeigen höhere Schälfestigkeiten im Vergleich zu Formulierungen mit SVI < 10.

## Patentansprüche

1. Verwendung von Copolymerisaten als Klebrigmacher für Klebstoffe, **dadurch gekennzeichnet, dass** die Klebstoffe ein oder mehrere Basispolymere, ein oder mehrere Klebrigmacher, gegebenenfalls ein oder mehrere Füllstoffe und gegebenenfalls ein oder mehrere Additive enthalten,
wobei die als Klebrigmacher eingesetzten Copolymerisate hergestellt werden durch radikalisch initiierte Lösungspolymerisation von
a) einem oder mehreren ethylenisch ungesättigten Monomeren ausgewählt der Gruppe umfassend Vinylacetat, Methylmethacrylat, Methylacrylat und Styrol,
b) 5 bis 60 Gew.-% von einem oder mehreren ethylenisch ungesättigten Monomeren ausgewählt aus der Gruppe umfassend Vinylester von unverzweigten oder verzweigten Alkylcarbonsäuren mit 3 bis 15 C-Atomen und Acrylsäureester oder Methacrylsäureester von unverzweigten oder verzweigten Alkoholen mit 2 bis 22 C-Atomen, und
c) 0,5 bis 15 Gew.-% von einem oder mehreren ethylenisch ungesättigten Monomeren enthaltend mindestens eine weitere funktionelle Gruppe ausgewählt aus der Gruppe umfassend Sulfonsäure-, Schwefelsäure-, Phosphonsäure-, CarbonsäureGruppen, oder die Salze der genannten Säuren, Carbonsäureanhydrid-, Hydroxy-Gruppen, Silicium-funktionelle Gruppen,
und Amin- oder Ammonium-Gruppen,
wobei sich die Angaben in Gew.-% jeweils auf das Gesamtgewicht des jeweiligen Copolymerisats beziehen, und
wobei die Basispolymere von den Klebrigmachern verschieden sind.

2. Verwendung von Copolymerisaten als Klebrigmacher nach Anspruch 1, **dadurch gekennzeichnet, dass** die als Klebrigmacher eingesetzten Copolymerisate auf 38 bis 89 Gew.-% Monomere a) basieren, bezogen auf das Gesamtgewicht des jeweiligen Copolymerisats.

3. Verwendung von Copolymerisaten als Klebrigmacher nach Anspruch 1 oder 2, **dadurch gekennzeichnet, dass** die als Klebrigmacher eingesetzten Copolymerisate auf 10 bis 50 Gew.-% Monomere b) basieren, bezogen auf das Gesamtgewicht des jeweiligen Copolymerisats.

4. Verwendung von Copolymerisaten als Klebrigmacher nach Anspruch 1 bis 3, **dadurch gekennzeichnet, dass** die Monomere c) ausgewählt werden aus der Gruppe umfassend ethylenisch ungesättigte Carbonsäuren oder deren Salze; mit Hydroxy-Gruppen substituierte Methacrylsäure- oder Acrylsäureester; ethylenisch ungesättigte Anhydride; ethylenisch ungesättigte aminofunktionelle Monomere; ethylenisch ungesättigte Monomere mit quarternären Ammoniumgruppen; ethylenisch ungesättigte Sulfonsäuren oder deren Salze; und ethylenisch ungesättigte Silicium-funktionelle Monomere.

5. Verwendung von Copolymerisaten als Klebrigmacher nach Anspruch 1 bis 4, **dadurch gekennzeichnet, dass** die als Klebrigmacher eingesetzten Copolymerisate auf 1 bis 12 Gew.-% Monomere c) basieren, bezogen auf das Gesamtgewicht des jeweiligen Copolymerisats.

6. Verwendung von Copolymerisaten als Klebrigmacher nach Anspruch 1 bis 5, **dadurch gekennzeichnet, dass** die als Klebrigmacher eingesetzten Copolymerisate auf
a) 50 bis 78 Gew.-% Vinylacetat,
b) 20 bis 40 Gew.-% von einem oder mehreren Monomeren aus der Gruppe umfassend Vinyllaurat, n-Butylacrylat und Vinylester von α-verzweigten Monocarbonsäuren mit 5 bis 11 C-Atomen sowie
c) 2 bis 10 Gew.-% von einem oder mehreren Monomeren aus der Gruppe umfassend Acrylsäure oder deren Salze, Hydroxyethyl-, Hydroxypropyl-acrylat oder -methacrylat, Vinyltrialkoxysilane oder Vinylmethyldialkoxysilane basieren, wobei sich die Angaben in Gew.-% jeweils auf das Gesamtgewicht des jeweiligen Copolymerisats beziehen und sich auf 100 Gew.-% aufaddieren.

7. Verwendung von Copolymerisaten als Klebrigmacher nach Anspruch 1 bis 6, **dadurch gekennzeichnet, dass** der Quotient der komplexen Schmelzviskosität SVI (40/60) der als Klebrigmacher eingesetzten Copolymerisate ≥ 1.0 betragt, wobei sich der Quotient der komplexen Schmelzviskosität SVI (40/60) nach der Formel SVI (40/60) = η* (40°C) / η* (60°C) errechnet, worin η* (40°C) für die komplexe Schmelzviskosität bei 40°C und η* (60°C) für die komplexe Schmelzviskosität bei 60°C steht (Bestimmung der komplexen Schmelzviskosität mit dem Gerät Bohlin CVO 120 HR mit dem Messsystem Platte/Platte mittels oszillierender Messung bei einer Frequenz von 1 Hz bei der genannten Temperatur) .

8. Verwendung von Copolymerisaten als Klebrigmacher nach Anspruch 7, **dadurch gekennzeichnet, dass** während der Lösungapolymerisation 50 bis 70 Gew.-% Lösungsmittel zugegen sind, bezogen auf das Gesamtgewicht der insgesamt eingesetzten ethylenisch ungesättigten Monomere.

9. Verwendung von Copolymerisaten als Klebrigmacher nach Anspruch 1 bis 8, **dadurch gekennzeichnet, dass** die Klebstoffe 5 bis 40 Gew.-% an einem oder mehreren Copolymerisaten auf Basis der Monomere a) bis c) als Klebrigmacher, 15 bis 40 Gew.-% an einem oder mehreren Basispolymeren, gegebenenfalls 30 bis 60 Gew.-% an einem oder mehreren Füllstoffe und
gegebenenfalls 0,5 bis 5 Gew.-% an einem oder mehreren Additiven enthalten, wobei sich die Angaben in Gew.-% auf das Gesamtgewicht des jeweiligen Klebstoffs beziehen.

10. Verwendung von Copolymerisaten als Klebrigmacher nach Anspruch 1 bis 9, **dadurch gekennzeichnet, dass** ein oder mehrere Basispolymere ausgewählt werden aus der Gruppe umfassend lösemittelhaltige Nassklebstoffe, Dispersionsklebstoffe, Hotmelts, Cyanacrylat-Klebstoffe, Methylmethacrylat-Klebstoffe, Phenol-Formaldehydharz-Klebatoffe, Silikone, Silanvernetzende Polymerklebstoffe, Epoxidharz-Klebstoffe, Polyurethanklebstoffe, Homo- oder Copolymere von Polymilchsäure, sonstige vernetzbare Polymere und Polymere auf Basic von einem oder mehreren ethylenisch ungesättigten Monomeren ausgewählt aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene oder Vinylhalogenide,
wobei die Basispolymere von den als Klebrigmacher eingesetzten Copolymerisaten verschieden sind.

11. Verwendung von Copolymerisaten als Klebrigmacher nach Anspruch 1 bis 10, **dadurch gekennzeichnet, dass** die Basispolymere ausgewählt werden aus der Gruppe umfassend vinylacetat-Homopolymerisate; Copolymerisate von Vinylacetat mit einem oder mehreren weiteren Vinylestern und gegebenenfalls Ethylen; Copolymerisate von Vinylacetat mit Ethylen und/oder Vinylchlorid; Copolymerisate von Vinylacetat mit (Meth)acrylsäureestern; Styrol-Homopolymerisate; copolymerisate von Styrol und Butadien oder (Meth)acrylsäureestern; Meth)acrylsäureester-Homo- oder Copolymerisate; und Homo- oder Copolymere von Isopren,
wobei die Basispolymere von den als Klebrigmacher eingesetzten Copolymerisaten verschieden sind.

## Claims

1. Use of copolymers as tackifiers for adhesives, **characterized in that** the adhesives comprise one or more base polymers, one or more tackifiers, optionally one or more fillers and optionally one or more additives,
the copolymers used as tackifiers being prepared by radically initiated solution polymerization of
a) one or more ethylenically unsaturated monomers selected from the group encompassing vinyl acetate, methyl methacrylate, methyl acrylate and styrene,
b) 5 to 60 wt % of one or more ethylenically unsaturated monomers selected from the group encompassing vinyl esters of unbranched or branched alkylcarboxylic acids having 3 to 15 C atoms and acrylic esters or methacrylic esters of unbranched or branched alcohols having 2 to 22 C atoms, and
c) 0.5 to 15 wt % of one or more ethylenically unsaturated monomers comprising at least one further functional group selected from the group encompassing sulphonic, sulphuric, phosphonic and carboxylic acid groups, or the salts of the said acids, carboxylic anhydride groups, hydroxyl groups, silicon-functional groups, and amine or ammonium groups,
the figures in wt % being based in each case on the total weight of the respective copolymer, and
the base polymers being different from the tackifiers.

2. Use of copolymers as tackifiers according to Claim 1, **characterized in that** the copolymers used as tackifiers are based on 38 to 89 wt % of monomers a), based on the total weight of the respective copolymer.

3. Use of copolymers as tackifiers according to Claim 1 or 2, **characterized in that** the copolymers used as tackifiers are based on 10 to 50 wt % of monomers b), based on the total weight of the respective copolymer.

4. Use of copolymers and tackifiers according to Claim 1 to 3, **characterized in that** the monomers c) are selected from the group encompassing ethylenically unsaturated carboxylic acids or salts thereof; methacrylic or acrylic esters substituted by hydroxyl groups; ethylenically unsaturated anhydrides; ethylenically unsaturated amino-functional monomers; ethylenically unsaturated monomers having quaternary ammonium groups; ethylenically unsaturated sulphonic acids or their salts; and ethylenically unsaturated silicon-functional monomers.

5. Use of copolymers as tackifiers according to Claim 1 to 4, **characterized in that** the copolymers used as tackifiers are based on 1 to 12 wt % of monomers c), based on the total weight of the respective copolymer.

6. Use of copolymers as tackifiers according to Claim 1 to 5, **characterized in that** the copolymers used as tackifiers are based on
a) 50 to 78 wt % of vinyl acetate,
b) 20 to 40 wt % of one or more monomers from the group encompassing vinyl laurate, n-butyl acrylate and vinyl esters of α-branched monocarboxylic acids having 5 to 11 C atoms, and also
c) 2 to 10 wt % of one or more monomers from the group encompassing acrylic acid or salts thereof, hydroxyethyl and hydroxypropyl acrylate or methacrylate, vinyltri-alkoxysilanes or vinylmethyldialkoxysilanes,
the figures in wt % being based in each case on the total weight of the respective copolymer and adding up to 100 wt %.

7. Use of copolymers as tackifiers according to Claim 1 to 6, **characterized in that** the ratio of the complex melt viscosity SVI (40/60) of the copolymers used as tackifiers is ≥ 10,
the ratio of the complex melt viscosity SVI (40/60) being calculated according to the formula SVI (40/60) = η* (40°C)/ η* (60°C), wherein η* (40°C) stands for the complex melt viscosity at 40 °C and η* (60°C) for the complex melt viscosity at 60°C (determination of the complex melt viscosity using the Bohlin CVO 120 HR instrument with the plate/plate measuring system by means of oscillating measurement at a frequency of 1 Hz at the stated temperature).

8. Use of copolymers as tackifiers according to Claim 7, **characterized in that** 50 to 70 wt % of solvents are present during the solution polymerization, based on the total weight of the ethylenically unsaturated monomers employed overall.

9. Use of copolymers as tackifiers according to Claim 1 to 8, **characterized in that** the adhesives comprise 5 to 40 wt % of one or more copolymers based on the monomers a) to c) as tackifiers, 15 to 40 wt % of one or more base polymers,
optionally 30 to 60 wt % of one or more fillers and optionally 0.5 to 5 wt % of one or more additives, the figures in wt % being based on the total weight of the respective adhesive.

10. Use of copolymers as tackifiers according to Claim 1 to 9, **characterized in that** one or more base polymers are selected from the group encompassing solvent-containing wet adhesives, dispersion-based adhesives, hotmelts, cyanoacrylate adhesives, methyl methacrylate adhesives, phenol-formaldehyde resin adhesives, silicones, silane-crosslinking polymer adhesives, epoxy resin adhesives, polyurethane adhesives, homopolymers or copolymers of polylactic acid, other crosslinkable polymers, and polymers based on one or more ethylenically unsaturated monomers selected from the group encompassing vinyl esters of unbranched or branched alkylcarboxylic acids having 1 to 15 C atoms, methacrylic esters and acrylic esters of alcohols having 1 to 15 C atoms, vinylaromatics, olefins, dienes or vinyl halides,
the base polymers being different from the copolymers used as tackifiers.

11. Use of copolymers as tackifiers according to Claim 1 to 10, **characterized in that** the base polymers are selected from the group encompassing vinyl acetate homopolymers; copolymers of vinyl acetate with one or more further vinyl esters and optionally ethylene; copolymers of vinyl acetate with ethylene and/or vinyl chloride; copolymers of vinyl acetate with (meth)acrylic esters; styrene homopolymers; copolymers of styrene and butadiene or (meth)acrylic esters; (meth)acrylic ester homopolymers or copolymers; and homopolymers or copolymers of isoprene,
the base polymers being different from the copolymers used as tackifiers.

## Revendications

1. Utilisation de copolymères comme agents poisseux pour des adhésifs, **caractérisée en ce que** les adhésifs contiennent un ou plusieurs polymères de base, un ou plusieurs agents poisseux, le cas échéant une ou plusieurs charges et le cas échéant un ou plusieurs additifs, les copolymères utilisés comme agents poisseux étant préparés par polymérisation en solution initiée par voie radicalaire
a) d'un ou de plusieurs monomères éthyléniquement insaturés choisis dans le groupe comprenant l'acétate de vinyle, le méthacrylate de méthyle, l'acrylate de méthyle et le styrène,
b) de 5 à 60% en poids d'un ou de plusieurs monomères éthyléniquement insaturés, choisis dans le groupe comprenant les esters vinyliques d'acides alkylcarboxyliques non ramifiés ou ramifiés, comprenant 3 à 15 atomes de carbone et les esters de l'acide acrylique ou méthacrylique et d'alcools non ramifiés ou ramifiés, comprenant 2 à 22 atomes de carbone, et
c) de 0,5 à 15% en poids d'un ou de plusieurs monomères éthyléniquement insaturés contenant au moins un autre groupe fonctionnel choisi dans le groupe comprenant les groupes acide sulfonique, acide sulfurique, acide phosphonique, acide carboxylique ou les sels des acides mentionnés, les groupes anhydride d'acide carboxylique, les groupes hydroxy, les groupes fonctionnels de silicium et les groupes amine ou ammonium,
les indications en % en poids se rapportant à chaque fois au poids total du copolymère en question et les polymères de base étant différents des agents poisseux.

2. Utilisation de copolymères comme agents poisseux selon la revendication 1, **caractérisée en ce que** les copolymères utilisés comme agents poisseux sont à base de 38 à 89% en poids de monomères a), par rapport au poids total du copolymère en question.

3. Utilisation de copolymères comme agents poisseux selon la revendication 1 ou 2, **caractérisée en ce que** les copolymères utilisés comme agents poisseux sont à base de 10 à 50% en poids de monomères b), par rapport au poids total du copolymère en question.

4. Utilisation de copolymères comme agents poisseux selon la revendication 1 à 3, **caractérisée en ce que** les monomères c) sont choisis dans le groupe comprenant les acides carboxyliques éthyléniquement insaturés ou leurs sels ; les esters de l'acide méthacrylique ou acrylique substitués par des groupes hydroxy ; les anhydrides éthyléniquement insaturés ; les monomères aminofonctionnels éthyléniquement insaturés ; les monomères éthyléniquement insaturés présentant des groupes d'ammonium quaternaire ; les acides sulfoniques éthyléniquement insaturés ou leurs sels ; et les monomères fonctionnels de silicium éthyléniquement insaturés.

5. Utilisation de copolymères comme agents poisseux selon la revendication 1 à 4, **caractérisée en ce que** les copolymères utilisés comme agents poisseux sont à base de 1 à 12% en poids de monomères c), par rapport au poids total du copolymère en question.

6. Utilisation de copolymères comme agents poisseux selon la revendication 1 à 5, **caractérisée en ce que** les copolymères utilisés comme agents poisseux sont à base de
a) 50 à 78% en poids d'acétate de vinyle,
b) 20 à 40% en poids d'un ou de plusieurs monomères du groupe comprenant le laurate de vinyle, l'acrylate de n-butyle et les esters vinyliques d'acides monocarboxyliques ramifiés en position α comprenant 5 à 11 atomes de carbone ainsi que
c) 2 à 10% en poids d'un ou de plusieurs monomères du groupe comprenant l'acide acrylique ou ses sels, l'acrylate ou le méthacrylate d'hydroxyéthyle et d'hydroxypropyle, les vinyltrialcoxysilanes ou les vinylméthyldialcoxysilanes,
les indications en % en poids se rapportant à chaque fois au poids total du copolymère en question et la somme valant 100% en poids.

7. Utilisation de copolymères comme agents poisseux selon la revendication 1 à 6, **caractérisée en ce que** le quotient de la viscosité complexe à l'état fondu IVF (40/60) des copolymères utilisés comme agents poisseux est ≥ 10, le quotient de la viscosité complexe à l'état fondu IVF (40/60) étant calculé selon la formule IVF (40/60) = η* (40°C/η* (60°C), dans laquelle η* (40°C) représente la viscosité complexe à l'état fondu à 40°C et η* (60°C) représente la viscosité complexe à l'état fondu à 60°C (détermination de la viscosité complexe à l'état fondu à l'aide de l'appareil Bohlin CVO 120 HR avec le système de mesure plaque/plaque au moyen d'une mesure oscillante à une fréquence de 1 Hz à la température mentionnée).

8. Utilisation de copolymères comme agents poisseux selon la revendication 7, **caractérisée en ce que** 50 à 70% en poids de solvant sont présents lors de la polymérisation en solution, par rapport au poids total des monomères éthyléniquement insaturés utilisés au total.

9. Utilisation de copolymères comme agents poisseux selon la revendication 1 à 8, **caractérisée en ce que** les adhésifs contiennent 5 à 40% en poids d'un ou de plusieurs copolymères à base des monomères a) à c) comme agents poisseux, 15 à 40% en poids d'un ou de plusieurs polymères de base, le cas échéant 30 à 60% en poids d'une ou de plusieurs charges et le cas échéant 0,5 à 5% en poids d'un ou de plusieurs additifs, les indications en % en poids se rapportant au poids total de l'adhésif en question.

10. Utilisation de copolymères comme agents poisseux selon la revendication 1 à 9, **caractérisée en ce qu'**un ou plusieurs polymères de base sont choisis dans le groupe comprenant les adhésifs humides contenant des solvants, les adhésifs en dispersion, les masses thermofusibles, les additifs de cyanoacrylate, les adhésifs de méthacrylate de méthyle, les adhésifs de résine de phénol-formaldéhyde, les silicones, les adhésifs polymères réticulant par silane, les adhésifs de résine époxyde, les adhésifs de polyuréthane, les homopolymères ou copolymères de poly(acide lactique), d'autres polymères réticulables et d'autres polymères à base d'un ou de plusieurs monomères éthyléniquement insaturés choisis dans le groupe comprenant les esters vinyliques d'acides alkylcarboxyliques non ramifiés ou ramifiés comprenant 1 à 15 atomes de carbone, les esters de l'acide méthacrylique et de l'acide acrylique d'alcools comprenant 1 à 15 atomes de carbone, les aromatiques de vinyle, les oléfines, les diènes ou les halogénures de vinyle, les polymères de base étant différents des copolymères utilisés comme agents poisseux.

11. Utilisation de copolymères comme agents poisseux selon la revendication 1 à 10, **caractérisée en ce que** les polymères de base sont choisis dans le groupe comprenant les homopolymères d'acétate de vinyle ; les copolymères d'acétate de vinyle avec un ou plusieurs autres esters de vinyle et le cas échéant de l'éthylène ; les copolymères d'acétate de vinyle avec de l'éthylène et/ou du chlorure de vinyle ; les copolymères d'acétate de vinyle avec des esters de l'acide (méth)acrylique ; les homopolymères de styrène ; les copolymères de styrène et de butadiène ou des esters de l'acide (méth)acrylique ; les homopolymères ou copolymères des esters de l'acide (méth)acrylique ; et les homopolymères ou copolymères de l'isoprène, les polymères de base étant différents des copolymères utilisés comme agents poisseux.
